Europäisches Patentamt

European Patent Office

Office européen des brevets

(11) Publication number: **0 404 434**
**A1**

## EUROPEAN PATENT APPLICATION

(21) Application number: **90306477.2**

(22) Date of filing: **14.06.90**

(51) Int. Cl.5: **F16H 7/02, A01D 34/47**

(30) Priority: **22.06.89 GB 8914323**

(43) Date of publication of application:
**27.12.90 Bulletin 90/52**

(84) Designated Contracting States:
**BE DE DK ES FR GB IT NL SE**

(71) Applicant: **ELECTROLUX NORTHERN LIMITED**
**Preston Road Aycliffe Industrial Estate**
**Newton Aycliffe Co. Durham, DL5 6UP(GB)**

(72) Inventor: **Dunn, Kenneth**
**70 Fulthorpe Avenue**
**Mowden park, Darlington(GB)**

(74) Representative: **Arthur, Bryan Edward et al**
**Withers & Rogers 4 Dyer's Buildings Holborn**
**London EC1N 2JT(GB)**

(54) Power transmission system.

(57) A power transmission system employs an endless belt having a toothed or ribbed friction surface (13) and a smooth surface, the belt passing over a correspondingly toothed or ribbed drive pulley (12) and over a smooth idler (14) with a half twist (15) between the two so that the smooth surface of the belt passes over the idler (14). A driven wheel (17) suitably grooved or ribbed engages the surface of the belt where it passes over the idler (14). The driven pulley (17) may be adjustable circumferentially about the axis of the idler (14).

The invention is described by way of example as applied to the driving of the cutters (16) of a cylinder mower.

EP 0 404 434 A1

## POWER TRANSMISSION SYSTEM

The present invention relates to power transmission systems.

In power driven machinery and appliances, the need often arises to transmit power from a drive wheel on, for example, the output shaft of an electric motor or an engine, to a driven wheel spaced some distance away. Various forms of power transmission devices are used for this purpose. Trains of pinion wheels may be employed, but they involve considerable power losses, they may become noisy in operation, particularly as they wear in use, and they generally require lubrication, which attracts and traps dirt and clogs the teeth of the wheels, further reducing their efficiency. A power shaft may be coupled by bevel gears to the drive and driven shafts, but this is also subject to similar disadvantages. Roller chains and sprocket wheels also require lubrication and constant cleaning and maintenance, and are also noisy in operation.

The above transmission devices are relatively expensive and require continual lubrication and maintenance. An alternative which is less expensive is to employ an endless belt drive. Flat belts passing over smooth surfaced pulleys are inexpensive and do not require lubrication, and wear is substantially confined to the belt itself, which is easily replaceable. Such belts are liable to creep or slip at high loads, but this may be overcome by using pulleys with toothed or ribbed surfaces and a belt with matching teeth or ribs on its mating surface.

Belt drives have the disadvantages that the spacing of the drive and driven wheels is not readily adjustable, since it is determined by the dimensions of the belt. Also, since the belt passes round both the drive and driven wheels, the driven unit cannot easily be removed and replaced for maintenance, or made interchangeable with other units or positionally adjusted with respect to the driving wheel.

An object of the present invention is to provide a power transmission system which is inexpensive, easy to maintain, and less subject to the disadvantages mentioned above.

The invention, which is defined in the claims appended hereto, makes use of a toothed or grooved belt, the teeth or grooves on which engage a correspondingly patterned drive pulley. The belt then passes with a half turn over a smooth idler pulley, the flat back surface of the belt engaging the idler pulley, and a driven pulley suitably toothed or grooved engages the now outwardly-facing surface of the belt where it passes over the idler.Alternatively a belt ribbed or toothed on opposite surfaces may be employed thereby overcoming the necessity to half-turn the belt as previously described.

Thus, since arrangement the belt does not pass round the driven wheel, and so the unit having the driven wheel may be made removable for maintenance or interchange' with other units. Furthermore, its position may be varied or adjusted radially about the axis of the idler wheel so as to maintain contact between the driven wheel and the surface of the belt where it passes over the idler. The invention is applicable to many items of equipment where power has to be transmitted from a drive shaft to a driven shaft. Gne particular example which will be taken for purposes of description is a lawn mower which may be an air supported mower or a non-air dependent mower in which power is to be transmitted from a petrol engine or electric motor to a cutting cylinder of the mower. The transmission of the invention may also be used directly or indirectly to effect movement of the mower during cutting.

The invention will now be described further with reference to the accompanying drawings in which:-

Figure 1 is a diagrammatic view of a power transmission according to the invention;

Figure 2 is a fragmentary section illustrating the application of the invention to a power driven lawn mower,and,

Figure 3 is a modification of Figure 1. Referring first to Figure 1, a power shaft 11 carries drive pulley 12. The outer surface of the pulley 12 is grooved and engages an inwardly facing grooved surface of a poly-V drive belt 13. This belt passes over an idler pulley 14, rotatable about an axis 18 and having a smooth external surface. Between the two pulleys the belt has a half twist, as illustrated at 15, so that the flat surface of the belt, which normally would face outwardly, now faces inwardly and bears against the smooth surface of the idler pulley 14.

The mower has a cutter assembly C mounted as a replaceable unit in which the cutting cylinder 16 is driven by a driven pulley 17. This pulley is grooved to match the friction surface of the belt 13, against which it is preloaded by mounting means (not shown). In order to adjust the cutting height the cutter assembly pivots as a whole about the axle 18 of the idler pulley 14 projections on the cutter assembly have forks or recesses 19 engaging the axle 18 to ensure that the cutter assembly moves circumferentially about the axle 18 with the cutters maintained in the correct orientation.

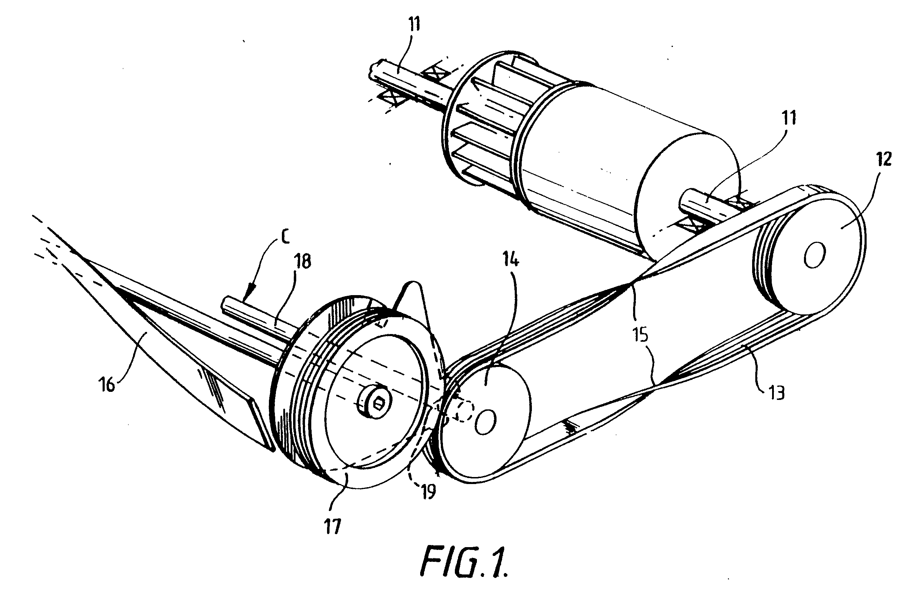

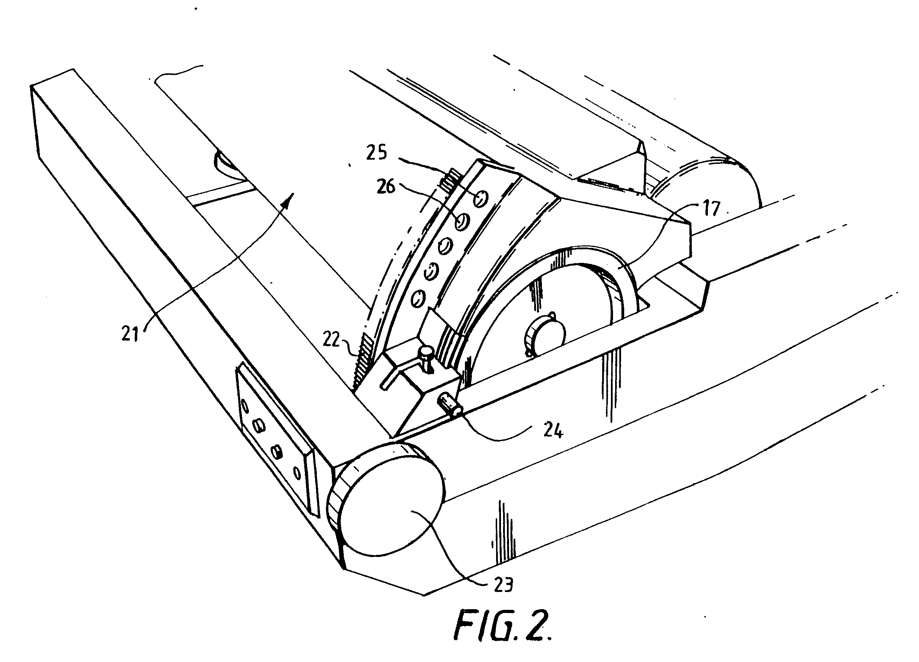

Figure 2 is a diagrammatic view of a part of a mower showing the transmission system of the invention. The drive pulley 12, drive belt 13 and idler pulley 14 have already been described with reference to Figure 1. The cutter assembly 21 is removable, but when placed in position it is adjustable angularly about the axle 18 of the idler pulley 14 to vary the cutting height. In all positions the driven pulley 17 maintains uniform contact with the belt 13 as it passes over the idler pulley.

To adjust the position of the cutter assembly a toothed segment 22 is engaged by a pinion operated by an adjusting knob 23. By referring back to Figure 1 it will seen that this tilts the cutter assembly about the axis or axle 18 of the idler pulley by reason of the forks 19 which engage this axle. When the cutter assembly has been adjusted to the desired position it can be locked by means of a locking bolt 24 engaging an appropriate one of a series of holes 25,26 etc. Other locking means may be used as desired.

Since the drive belt 13 does not encompass the driven pulley 17, the belt forms no obstacle to the cutter assembly being removed for maintenance, or being replaced by any other desired unit, which may or may not require a power drive.

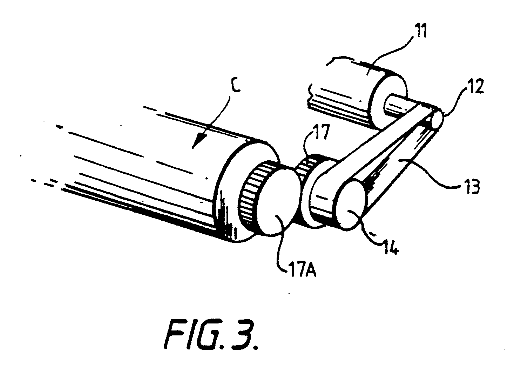

Referring to Figure 3 in which the same reference numbers are used for similar components as in Figure 1, final drive for the pulley 14 to the cutter assembly C is via a gear train 17/17A.

If desired a poly-V belt having longitudinally extending grooves on each major surface or a belt having transverse teeth on each major surface may be used to replace the poly-V drive belt 13 shown in Figure 2. In the case of the poly-V belt having longitudinally extending grooves on each major surface, the idler pully 14 (Figure 2)would also be formed with a grooved outer surface in the manner of the pulley 12 (Figure 2). In the case of a belt having transverse teeth on each major surface, the pulleys 12, 14 and 17 would each be formed with grooves of corresponding shape to the teeth on the belt.

## Claims

1. A power transmission system comprising an endless belt having a toothed or ribbed friction surface and a smooth surface, correspondingly toothed or ribbed drive and driven pulleys, and a smooth idler, the endless belt engaging the drive pulley and passing with a half twist over the idler so that its toothed or ribbed surface faces outwardly and with the driven pulley engaged by the toothed or ribbed surface of the belt where it passes over the idler.

2. A power transmission system according to claim 6 in which the belt is a grooved or poly-V belt.

3. A power transmission system comprising an endless belt having a toothed or ribbed friction surface correspondingly toothed or ribbed drive and driven pulleys, and an idler, the endless belt engaging the drive pulley and the idler so that its toothed or ribbed surface faces outwardly and with the driven pulley engaged by the toothed or ribbed surface of the belt where it passes over the idler.

4. A power transmission according to claim 3 in which the belt is a poly-V belt having longitudinally extending grooves on each major surface of the belt.

5. A power transmission according to claim 3 in which the belt has transverse teeth on each major surface of the belt.

6. A power transmission system comprising an endless belt having a toothed or ribbed friction surface and a smooth surface, correspondingly toothed or ribbed drive and driven pulleys, and a smoth idler, the endless belt engaging the drive pulley and passing with a half twist over the idler so that its toothed or ribbed surface faces outwardly and with the driven pulley engaged by the toothed or ribbed surface of the belt where it passes over the idler.

7. A power transmission system according to claim 6 in which the belt is a grooved or poly-V belt.

8. A power transmission system according to any preceding claim in which the driven pulley forms part of a sub-assembly, and means for adjusting the sub-assembly about an axis substantially coinciding with that of the idler.

9. A power transmission system according to claim 8 in a lawn mower, in which the sub-assembly comprises a cylinder cutter head arid 'she adjustment regulates the height of cut.

10. A power transmission system according to any preceding claim wherein the teeth or ribs extend longitudinally of the endless belt.

11. A power transmission according to anyone of claims 1 to 9 wherein the teeth or ribs extend transversely of the endless belt.

12. A lawn mower including a power transmission according to any preceding claims.

13. A lawn mower according to claim 12 including means for at least partially supporting the mower on a cushion of air.

FIG.1.

FIG.2.

EP 0 404 434 A1

FIG. 3.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | IBM Technical Disclosure Bulletin Vol. 10 No. 2 July 1967 Reverse Rotation Belt Drive   D.E. AAKRE page 151 | 1, 3, 5, 6 | F16H7/02 A01D34/47 |
| A | EP-A-0316482 (PACINI) * page 2; figure 1 * | 1, 3, 5, 6 | |
| A | US-A-2852083 (CAVANAUGH) * columns 3 - 6; figures 1-6 * | 1, 9-13 | |

TECHNICAL FIELDS SEARCHED (Int. Cl.5)

F16H
A01D

The present search report has been drawn up for all claims

| Place of search | Date of completion of the search | Examiner |
|---|---|---|
| THE HAGUE | 25 SEPTEMBER 1990 | FLORES E. |